# EUROPEAN PATENT SPECIFICATION

(11) **EP 2 502 502 B1**
(45) Date of publication and mention of the grant of the patent: **07.08.2013**
(21) Application number: 11159746.4
(22) Date of filing: 25.03.2011
(51) Int. Cl.: A23D 9/02, C11B 3/00, C11B 3/04, C11B 3/10, C11B 3/14

(54) **Refined plant oils obtained from washed plant material**
Aus gewaschenem Pflanzenmaterial erhaltene raffinierte Pflanzenöle
Huiles végétales raffinées obtenues à partir de matières végétales lavées

(43) Date of publication of application: 26.09.2012
(73) Proprietor: Nestec S.A., 1800 Vevey (CH)
(72) Inventor: Nagy, Kornél, 1005, LAUSANNE (CH); Sandoz, Laurence, 1040, ECHALLENS (CH); Destaillats, Frederic, 1077, SERVION (CH); Craft, Brian, 1815, Clarens (CH)
(74) Representative: Cogniat, Eric Jean Marie

(56) References cited:
- WO-A1-2011/009843
- WO-A2-2009/130291
- US-A- 2 881 195

## Description

The present invention generally relates to the field of refined oils. In particular, the present invention relates to refined plant oils substantially free of chlorinated contaminants, such as monochloropropanediol (MCPD), in particular 3-MCPD diesters, and to a process to produce such oils. To achieve this, plant material is washed to remove chlorine donors before a crude oil is produced that subsequently is further refined.

3-Halogen-1,2-propanediols, in particular 3-monochloro-1,2-propanediol (3-MCPD), are known contaminants in foods [Food Addit Contam. 2006, 23, 1290-1298]. A study indicates that 3-MCPD may be carcinogenic to rats if administered at high doses [Evaluation of Certain Food Additives and Contaminants, World Health Organization, Geneva, Switzerland 1993, pp. 267-285; Int J Toxicol. 1998, 17, 47.].

Refined bleached deodorized (RBD) vegetable oils have recently gained much attention due to the newly found existence of two potentially carcinogenic families of compounds called monochloropropanediol (MCPD). 3-MCPD was originally found in acid hydrolyzed vegetable protein (acid-HVP) [Z Lebensm-Unters Forsch. 1978, 167, 241-244]. Recently, it was found that refined edible oils may contain 3-MCPD in its fatty acid ester form, but only very little amounts of free 3-MCPD [Food Addit Contam. 2006, 23, 1290-1298]. Although there are presently no studies available on the toxicity of 3-MCPD-esters, the European Food Safety Authority (EFSA) recommends to treat 3-MCPD esters as free 3-MCPD in terms of toxicity [European Food Safety Authority 2008].

It is postulated that monochloropropanediol (MCPD) may arise from the chlorination of vegetable glycerides at very high temperatures, e.g., during the final step of the oil refining process, or deodorization, under which oils may be heated under vacuum (3-7 mbar) up to 260-270 °C.

Until now, little has been known as to the mechanisms through which this chlorination takes place, or the source of the incoming chlorine 'donor compounds'.

Currently, the presence of 3-MCPD in refined oils is carefully monitored and oils with a 3-MCPD content above a threshold value are discarded in order to ensure full compliance with EFSA recommendations.

As 3-MCPD may occur in many refined commercially important vegetable oils, there is a need in the art for further processes to avoid the production of such contaminants during oil refining.

The present inventors have addressed this need.

Consequently, it was the object of the present invention to provide the art with a method to avoid any generation of 3-monochloro-1,2-propanediol (3-MCPD) esters in oil refinement.

This objective was achieved by the subject matter of the independent claims. The subject matter of the dependant claims further develops the idea of the present invention.

In particular, the present inventors describe a method through which MCPD esters generation during the process of oil refining can be substantially reduced or prevented completely.

It has been well documented in the scientific literature that dehalogenation reactions can occur during thermal processes. Chlorine has been shown to leave chemical components as hydrogen chloride (gas) upon the input of sufficient activation energy, which is abundant during the deodorization of vegetable oils at high temperatures (up to 270 °C).

The present inventors believe that hydrogen chloride is evolved during oil refining from chlorine containing compounds inherently present in plant material.

Without wishing to be bound by theory, it is suggested that mechanistically, the MCPD di-esters may be formed during oil refinement via the protonation of the terminal ester group of triacylglycerols (TAG), which represent about 88-95% of total glycerides in most vegetable oils, through interaction with hydrogen chloride evolved during oil refining. The formed oxonium cation can then undergo intramolecular rearrangement, followed by nucleophilic substitution of chloride ion and the release of a free fatty acid and a MCPD di-ester.

The present inventors were surprised to see that they could significantly reduce or prevent completely the generation of polar chlorinated compounds, such as MCPD esters, and MCPD diesters, for example, by washing the plant material before the production of crude oil with a polar solvent.

The inventors were surprised to see that most chlorinated compounds in the plant material are of a polar nature, so that they can be effectively removed from plant material by a washing step with a polar solvent.

Once removed, these potential chlorine donors are no longer available for the generation of polar chlorinated compounds, such as MCPD esters, and MCPD di-esters, during the heating steps in oil refinement.

The inventors were also surprised to see that this washing step is the more effective, the earlier it is performed in the process of oil refinement.

Consequently, one embodiment of the present invention is a process to produce a refined plant oil substantially free of chlorinated contaminants, from plants, comprising a step of preparing a crude oil from plant components and a step of refining the crude oil to produce a refined plant oil, wherein the plant components are subjected to a washing step with a polar solvent non-miscible with the plant oil and the polar solvent phase is discarded before the crude plant oil is produced that is then subjected to refinement.

The chlorinated contaminants may be selected from the group consisting of monochloropropanediols (MCPD), MCPD mono-esters, MCPD di-esters, or combinations thereof.

The acids esterified to monochloropropanediols may be lauric, myristic, palmitic, stearic, oleic, linoleic acids for example.

In the framework of the present invention the plant material is washed with a polar solvent non-miscible with the plant oil before the crude oil is produced.

For the purpose of the present invention a crude oil shall be defined as an unrefined oil fraction expressed from mashed plant material containing at least 20 weight-% lipids, for example at least 50 weight-% lipids or at least 75 weight-% lipids.

According to the present invention, the plant material is washed with a polar solvent non-miscible with the plant oil.

"Non-miscible" means that the solvent-oil system will form at least two phases after the system is allowed to set.

Essentially, any polar solvent may be used for the purpose of the present invention. Preferably, the solvent is accepted in the production of food product, for example is food-grade or can be easily removed completely from the oil preparation.

Compounds are considered food grade if they are generally approved for human or animal consumption.

For example, the polar solvent non-miscible with the plant oil may be selected from the group consisting of alcohols, water, or combinations thereof. As alcohols, in particular ethanol, 2-propanol or glycerol may be used.

The inventors have found that the washing step of the present invention is in particular effective if mashed plant material, e.g., plant pulp, is subjected to the washing step.

Pulp may be manufactured using mechanical, semi-chemical or fully chemical methods. Preferred are mechanical methods such as grinding, milling or pressing, for example.

Hence, the plant components may be mashed into a pulp before the washing step.

As plant components, whole plants or any parts of plants may be used. Typically plant components are used that are well known for the production of food grade oils.

For example, the plant components may be selected from the group consisting of fruits, seeds or nuts.

For example, the plant component may be selected from the group consisting of palm fruits, soybeans, rapeseeds, canola, sunflower seeds, safflower seeds, coconuts, palm kernels, cottonseeds, peanuts, groundnuts, or combinations thereof.

For example, the plant components may be palm fruits, e.g., fruits of the oil palm *Elaeis guineensis,* for the production of palm oil.

The plant components may be washed with any amount of polar solvent non-miscible with the plant oil. Generally, larger amounts of solvent will generate better results.

In order to generate good results without wasting solvent, the washing step may also be repeated. Such a washing step may be repeated, e.g., once, twice or three times.

For example, the washing step may be carried out with a polar solvent that is added to the plant components in an amount in the range of about 2:1 to 1:2 (v/v), for example about 1:1 (v/v).

Washing the plant component with a polar solvent is sufficient to achieve the object of the present invention.

However, e.g., to obtain a clearer phase separation before the polar phase containing the chlorinated contaminants is removed the plant material may also be washed with a mixture of a polar solvent and a non-polar solvent.

For example, the washing step may be carried out with a polar solvent solution in combination with a non-polar solvent. The non polar solvent may be, for example, a food-grade oil or hexane. The non-polar solvent and the polar solvent may be used in any ratio, for example in the range of 2:1 to 1:2 (v/v), e.g., in a ratio in the range of 1 to 1 (v/v).

Elevated temperatures in the washing step help to ensure an effective transfer of the chlorinated polar compounds into the polar phase in a minimum amount of time.

Low temperatures are in principle possible depending of the melting point of the oil to be expressed, but a longer time for an effective washing step will be required.

Too high temperatures may have a negative influence on the quality of the resulting oil and may cause unwanted side reactions.

Consequently, in the process of the present invention the washing step of the plant components may be carried out at a temperature in the range of about 40 to 80 °C for about 1 to 5 minutes.

Agitation of the mixture will reduce the time required for an effective washing step. Hence, in one embodiment the plant components may be agitated during the washing step.

The polar solvent solution should be removed from the process as quickly as possible, as it contains the potential chlorine donor compounds. For example, the polar solvent solution may be removed before the crude oil is produced and/or may be continuously removed from the process.

This separation may be aided by centrifugation, for example.

The process of the present invention may further comprise a neutralization step, a centrifugation step and/or a drying step after the washing step.

Refined oils produced from plant material washed in accordance with the present invention will comprise less than 1 ppm, preferably less than 0.3 ppm of monochloropropanediol (MCPD), in particular MCPD diesters.

As the chlorine donors are removed from the plant material, heating during the refinement process will not cause the generation of these unwanted compounds.

Modern plant oil; e.g., vegetable oil; refinement today consists of two predominant methods, chemical and physical refining.

In efforts aimed at increased sustainability, oil refineries have modified their plant oil processing lines in the past few decades for the minimization of energy expenditure (economizers) and the reduction of waste; however, the steps of these two refining processes have essentially remained the same.

Physical refining is essentially an abridged form of chemical refining and was introduced as the preferred method of palm oil refining in 1973. It is unique in that it is a three step continuous operation where the incoming crude oil is pretreated with acid (degumming), cleansed by being passed through adsorptive bleaching clay, and then subjected to steam distillation. This process allows for the subsequent deacidification, deodorization, and decomposition of carotenoids unique to palm oil (i.e. the crude oil is deep red in color, unlike other vegetable oils). Given the lack of neutralization step in physical refining, refined bleached (RB) oil produced from a physical refinery contains nearly the same free fatty acid (FFA) levels as found in the crude oil.

Neutralized bleached (NB) oil from a chemical refinery specifies a limit of 0.15% in the NB oil (0.10 in the RBD/NBD fully refined oils). NB and RB palm oil are very comparable pre-deodorization in every other aspect.

It has been well established that the deodorization step of oil refining (whether chemical or physical), is the step at which MCPD esters are generated. Literature suggests that MCPD generation reactions increase exponentially (> 150 °C) and goes to completion in a short time period.

The heat bleaching unit operation is the main source of loss in the oil refining process resulting in 20-40% reduction in oil volume post filtration. The process lasts about 30-45min and takes place under 27-33mbar vacuum at a temperature of 95-110 °C.

Heat bleached oil is then rerouted in piping to a deaerator that aides in the removal of dissolved gases, as well as moisture, before being sent to the deodorization tower.

The process of the present invention typically comprises a pre-treatment step, followed by a bleaching step and a subsequent deodorization step.

Typically, the pre-treatment step comprises pre-treating the crude oil with an acid, the bleaching step comprises heating the oil and cleaning the oil by passing it through adsorptive bleaching clay, and the deodorization step comprises a steam distillation.

Consequently, in the process of the present invention the refinement may comprise a pre-treatment step, a bleaching step and a deodorization step.

The pre-treatment step may comprise washing the crude oil with an acid, the bleaching step may comprise heating the oil and cleaning the oil by passing it through adsorptive bleaching clay, and the deodorization step may comprise a steam distillation.

The present invention also extends to refined plant oil obtainable by a process in accordance with the present invention.

It is clear for those of skill in the art that they can freely combine features of the process and of the oil described in present invention without departing from the scope of the invention as disclosed.

Further advantages and features of the present invention are apparent from the following figures and example.

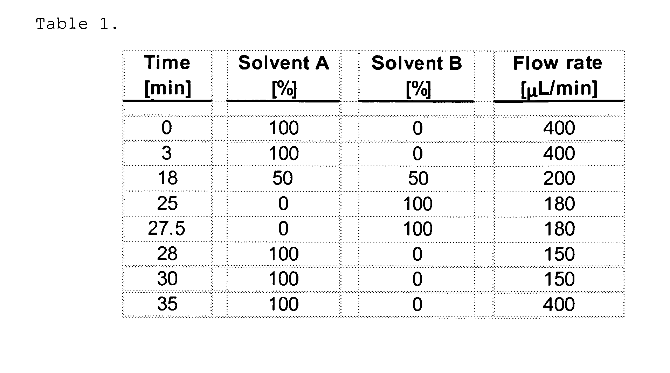

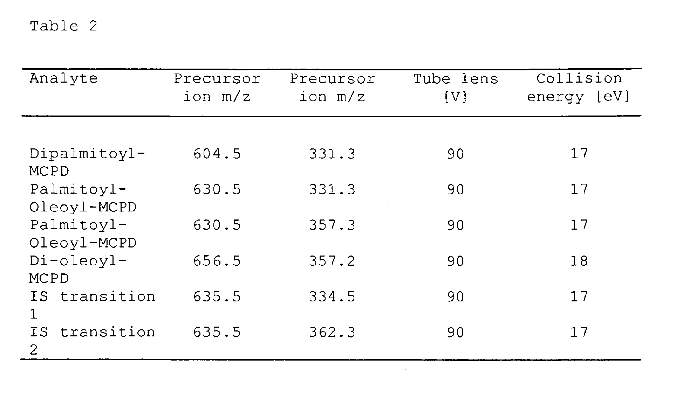

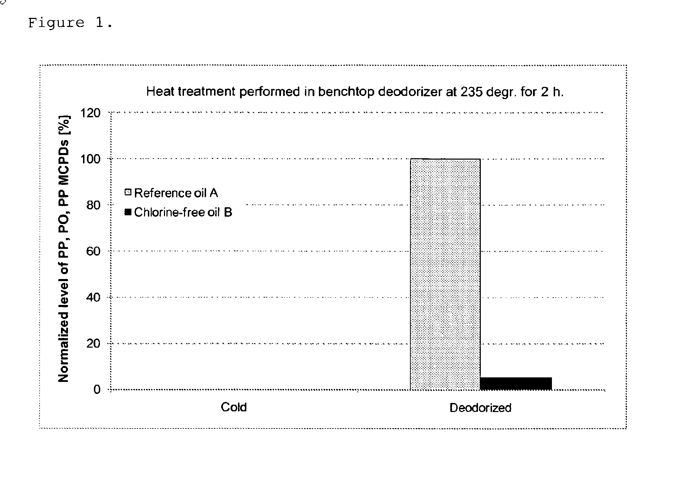

Figure 1 shows the level of MCPD di-esters (palmitoyl-oleoyl-MCPD, dipalmitoyl-MCPD, dioleoyl-MCPD, palmitoyl-linoleyl-MCPD, oleoyl-linoleyl-MCPD) in palm oil samples obtained conventionally (reference oil A) or after using the washing step (chlorine free oil B) after deodorization at 235°C for 2h. Values reported are normalized to the most intense signal.

Table 1 provides the liquid chromatographic gradient used for the separation of glycidyl esters, DAG, and TAG via ULC-MS/MS. Solvent A was 1 mM Ammonium-Formate in methanol, while solvent B was 100 µM Ammonium-formate in isopropanol.

Table 2 provides the single reaction monitoring (SRM) parameters of various analytes in the ULC-MS/MS system.

### Example:

### 1. Preparation of crude palm oil from palm fruits

2.3 kg frozen, whole, intact palm fruits were thawed at 50°C. The kernels were removed from the fruits manually using a knife and 1.5 kg pulp including the fruit flesh and skin was homogenized using a commercial immersion blender mixer (Bamix Gastro 200). The homogenate was divided into a 0.5 kg (portion A, reference oil A) and a 1 kg portion (Portion B, chlorine free oil B).

Reference oil A was prepared as follows: the 500 g homogenate was mixed for 2 min at room temperature with 475 mL 2-propanol and 950 mL n-hexane using a polytron (Kinematica Polytron PT 3000, PT-DA 3020/2 MEC probe). Then, the resulting slurry was aliquoted into 1 L polypropylene tubes (Sorvall 1000 mL) and was centrifuged at 4000 g for 15 min at room temperature in a Thermo Scientific Heraeus Cryofuge 8500i centrifuge. The organic phases were filtered through filterpaper (Whatman 597 1/2) and were combined (the aqueous phase and fibers were discarded). Then the organic solvent was evaporated from the oil using a Büchi Rotavapor R-210 system at a 60°C (B-491 heating bath, V-850 vacuum controller, V-700 pump). Vacuum was stepwise adjusted until 30 mbar to avoid boiling of the sample.

Chlorine free oil B was prepared as follows: the 1 kg homogenate was mixed for 2 min at room temperature with 2.85 L water and 5.7 L n-hexane using a polytron (Kinematica Polytron PT 3000, PT-DA 3020/2 MEC probe). Then, the resulting slurry was aliquoted into 1 L polypropylene tubes (Sorvall 1000 mL) and was centrifuged at 4000 g for 15 min at room temperature in a Thermo Scientific Heraeus Cryofuge 8500i centrifuge. The organic phases were filtered through filterpaper (Whatman 597 1/2) and were combined (the aqueous phase and fibers were discarded). Then the organic solvent was evaporated from the oil using a Büchi Rotavapor R-210 system at a 60°C (B-491 heating bath, V-850 vacuum controller, V-700 pump). Vacuum was stepwise adjusted until 30 mbar to avoid boiling of the sample.

### 2. Deodorization of palm oil samples

A 500mL total capacity bench-top glass vacuum stripping apparatus was utilized for RB palm oil deodorization experiments. This apparatus was equipped with a thermal-controlled heating mantle, 500mL oil vessel, thermal-regulated water bubbler, a distillation arm with a distillate trap (kept at ~ -60°C with dry ice immersed in 2-propanol), and a high-vacuum pump with pressure controller and safety trap (kept at ~ -180°C with liquid nitrogen). Oil samples were briefly warmed at 80°C in a convection oven to ensure homogeneity. For deodorization experiments, 200mL volumes of oil samples were deodorized in the aforementioned apparatus for 2h (3 h total residence time) at temperatures ranging from 180-240°C with a constant pressure of 2 mbar.

### 3. Analysis of MCPD esters in palm oil samples by liquid-chromatography tandem mass-spectrometry

A ThermoFisher Accela 1250 system was used to perform ultra high performance liquid chromatography. A silica based octadecyl phase (Waters Acquity HSS C18, 1.7 µm; 2.1x150 mm) was found adequate for the separation of analytes using a buffered methanol-isopropanol gradient; gradient summarized in Table 1. A ThermoFisher TSQ Quantum Access Max mass spectrometer was used for the relative quantification MCPD esters. Electrospray ionization in positive ion mode followed by triple quadrupole-based tandem mass spectrometry was used to detect MCPD esters. Applied transitions for the Selected Reaction Monitoring (SRM) experiments are given in Table 2. For all transitions, a dwell time of 150 ms and span of 0.2 m/z were used.

### 4. Effect of the washing treatment performed on the palm fruit pulp on MCPD di-esters formation during palm oil deodorization

Palm oil samples obtained by conventional solvent extraction (Reference oil A) and by the novel extraction (chlorine-free oil B) were compared to assess their susceptibility to form MCPD di-esters. The samples were challenged by two methods to form MCPD di-esters upon deodorization using a benchtop deodorizer. MCPD content in both oils (Reference A and Chlorine-free B) was compared after heat treatment using isotope dilution based ultrahigh performance liquid-chromatography-tandem mass spectrometry (ULC-MS/MS). Results shown in Figure 1 demonstrate the efficiency of the washing procedure in removing chlorine donors that are responsible for the formation of MCPD di-esters.

## Claims

1. Process to produce a refined plant oil substantially free of chlorinated contaminants, from plants, comprising a step of preparing a crude oil from plant components and a step of refining the crude oil to produce a refined plant oil, wherein the plant components are subjected to a washing step with a polar solvent non-miscible with the plant oil and the polar solvent phase is discarded before the crude plant oil is produced that is then subjected to refinement.

2. Process in accordance with claim 1, wherein the chlorinated contaminants are selected from the group consisting of monochloropropanediols (MCPD), MCPD esters, MCPD diesters, or combinations thereof.

3. Process in accordance with one of the preceding claims, wherein the refinement comprises a pretreatment step, a bleaching step and a deodorization step.

4. Process in accordance with claim 3, wherein the pretreatment step comprises washing the crude oil with an acid, the bleaching step comprises heating the oil and cleaning the oil by passing it through adsorptive bleaching clay, and the deodorization step comprises a steam distillation.

5. Process in accordance with one of the preceding claims, wherein the polar solvent is selected from the group consisting of alcohols, water, or combinations thereof.

6. Process in accordance with one of the preceding claims, wherein the plant components are mashed into a pulp before the washing step.

7. Process in accordance with one of the preceding claims, wherein the plant components are selected from the group consisting of fruits, seeds or nuts.

8. Process in accordance with one of the preceding claims, wherein the washing step is carried out with a polar solvent that is added to the plant components in an amount in the range of about 2:1 to 1:2 (v/v), for example about 1:1 (v/v).

9. Process in accordance with one of the preceding claims, wherein washing step is carried out with a polar solvent solution in combination with a nonpolar solvent, such as hexane, in a ratio in the range of 1 to 1.

10. Process in accordance with one of the preceding claims, wherein the washing step of the plants is carried out at a temperature in the range of about 40 to 80 °C for about 1 to 5 minutes.

11. Process in accordance with one of the preceding claims, wherein polar solvent solution is continuously removed from the process.

12. Process in accordance with one of the preceding claims, further comprising a neutralization step, a centrifugation step and/or a drying step after the washing step.

13. Process in accordance with one of the preceding claims, wherein the plant component is selected from the group consisting of palm fruits, soybeans, rapeseeds, canola, sunflower seeds, safflower seeds, coconuts, palm kernels, cottonseeds, peanuts, groundnuts, or combinations thereof.

14. Process in accordance with one of the preceding claims, wherein the refined plant oil comprises less than 1 ppm, preferably less than 0.3 ppm of monochloropropanediol (MCPD), in particular MCPD diesters.

## Patentansprüche

1. Verfahren zur Herstellung eines raffinierten Pflanzenöls, im wesentlichen frei von chlorierten Schadstoffen, aus Pflanzen, das einen Schritt der Herstellung eines Rohöls aus Pflanzenbestandteilen und einen Schritt des Raffinierens des Rohöls aufweist, um ein raffiniertes Pflanzenöl herzustellen, wobei die Pflanzenbestandteile einem Waschschritt mit einem, nicht mit dem Pflanzenöl mischbaren, polaren Lösungsmittel unterzogen werden, und die polare Lösungsmittelphase verworfen wird, bevor das rohe Pflanzenöl hergestellt wird, welches dann der Raffination unterzogen wird.

2. Verfahren nach Anspruch 1, wobei die chlorierten Schadstoffe aus der Gruppe ausgewählt sind, die Monochlorpropandiole (MCPD), MCPD-Ester, MCPD-Diester, oder Kombinationen daraus, aufweisen.

3. Verfahren nach einem der vorhergehenden Ansprüche, wobei die Raffination einen Vorbehandlungsschritt, einen Bleichschritt und einen Desodorierungsschritt aufweist.

4. Verfahren nach Anspruch 3, wobei der Vorbehandlungsschritt das Waschen des Rohöls mit Säure, der Bleichschritt das Erhitzen des Öls und Reinigen des Öls, indem es durch adsorptive Bleicherde geführt wird, und der Desodorierungsschritt eine Dampfdestillation aufweist.

5. Verfahren nach einem der vorhergehenden Ansprüche, wobei das polare Lösungsmittel aus der Gruppe ausgewählt ist, die Alkohole, Wasser, oder Kombinationen daraus, aufweist.

6. Verfahren nach einem der vorhergehenden Ansprüche, wobei die Pflanzenbestandteile vor dem Waschschritt zu einer Pulpe zerdrückt werden.

7. Verfahren nach einem der vorhergehenden Ansprüche, wobei die Pflanzenbestandteile aus der Gruppe ausgewählt sind, die Früchte, Saaten oder Nüsse aufweisen.

8. Verfahren nach einem der vorhergehenden Ansprüche, wobei der Waschschritt mit einem polaren Lösungsmittel durchgeführt wird, das den Pflanzenbestandteilen in einer Menge in der Größenordnung von ca. 2:1 bis 1:2 (v/v), beispielsweise ca. 1:1 (v/v), hinzugefügt wird.

9. Verfahren nach einem der vorhergehenden Ansprüche, wobei der Waschschritt mit einem polaren Lösungsmittel in Kombination mit einem nicht polaren Lösungsmittel, wie beispielsweise Hexan, in einem Verhältnis in der Größenordnung von 1 zu 1 durchgeführt wird.

10. Verfahren nach einem der vorhergehende Ansprüche, wobei der Waschschritt der Pflanzen bei einer Temperatur in der Größenordnung von ca. 40 bis 80 °C über ca. 1 bis 5 Minuten durchgeführt wird.

11. Verfahren nach einem der vorhergehenden Ansprüche, wobei das polare Lösungsmittel kontinuierlich aus dem Verfahren abgeschieden wird.

12. Verfahren nach einem der vorhergehenden Ansprüche, das weiterhin einen Neutralisierungsschritt, einen Zentrifugationsschritt und/oder einen Trocknungsschritt nach dem Waschschritt aufweist.

13. Verfahren nach einem der vorhergehenden Ansprüche, wobei der Pflanzenbestandteil aus der Gruppe ausgewählt ist, der Palmfrüchte, Sojabohnen, Rübsamen, Raps, Sonnenblumenkerne, Saflorsamen, Kokosnüsse, Palmkerne, Baumwollsamen, Erdnüsse, oder Kombinationen daraus, aufweist.

14. Verfahren nach einem der vorhergehenden Ansprüche, wobei das raffinierte Pflanzenöl weniger als 1 ppm, vorzugsweise weniger als 0,3 ppm, Monochlorpropandiol (MCPD), insbesondere MCPD-Diester, aufweist.

## Revendications

1. Procédé de production d'une plante végétale raffinée substantiellement exempt de contaminants chlorés, à partir de plantes, comprenant une étape de préparation d'une huile brute à partir de composants végétaux et une étape de raffinage de l'huile brute pour produire une huile végétale raffinée, dans lequel les composants végétaux sont soumis à une étape de lavage avec un solvant polaire non miscible avec l'huile végétale et la phase de solvant polaire est éliminée avant que l'huile végétale brute ne soit produite puis soumise au raffinage.

2. Procédé selon la revendication 1, dans lequel les contaminants chlorés sont sélectionnés dans le groupe constitué des monochloropropanediols (MCPD), des esters de MCPD, des diesters de MCPD, ou des combinaisons de ces derniers.

3. Procédé selon l'une des revendications précédentes, dans lequel le raffinage comprend une étape de prétraitement, une étape de blanchiment et une étape de désodorisation.

4. Procédé selon la revendication 3, dans lequel l'étape de prétraitement comprend le lavage de l'huile brute avec un acide, l'étape de blanchiment comprend le chauffage de l'huile et le nettoyage de l'huile en la faisant passer par de l'argile blanchissant et absorbant, et l'étape de désodorisation comprend une distillation à la vapeur.

5. Procédé selon l'une des revendications précédentes, dans lequel le solvant polaire est sélectionné dans le groupe constitué d'alcools, d'eau ou des combinaisons de ces derniers.

6. Procédé selon l'une des revendications précédentes, dans lequel les composants végétaux sont écrasés en purée avant l'étape de lavage.

7. Procédé selon l'une des revendications précédentes, dans lequel les composants végétaux sont sélectionnés dans le groupe constitué de fruits, graines ou noix.

8. Procédé selon l'une des revendications précédentes, dans lequel l'étape de lavage est effectuée avec un solvant polaire qui est ajouté aux composants végétaux dans une quantité comprise dans la plage allant d'environ 2 :1 à 1 :2 (v/v), par exemple environ 1 :1 (v/v).

9. Procédé selon l'une des revendications précédentes, dans lequel l'étape de lavage est effectuée avec une solution de solvant polaire en combinaison avec un solvant non polaire, comme l'hexane, dans un ratio de l'ordre de 1 à 1.

10. Procédé selon l'une des revendications précédentes, dans lequel l'étape de lavage des plantes est effectuée à une température comprise dans la gamme de 40 à 80°C pour environ 1 à 5 minutes.

11. Procédé selon l'une des revendications précédentes, dans lequel la solution de solvant polaire est enlevée en continu du procédé.

12. Procédé selon l'une des revendications précédentes, comprenant en outre une étape de neutralisation, une étape de centrifugation, et/ou une étape de séchage après l'étape de lavage.

13. Procédé selon l'une des revendications précédentes, dans lequel le composant végétal est sélectionné dans le groupe constitué de fruits palmiers, de soja, de colza, de canola, de graines de tournesol, de graines de carthame, de noix de coco, de coeurs de palmier, de graines de coton, de cacahuètes, d'arachide, ou de combinaisons de ces derniers.

14. Procédé selon l'une des revendications précédentes, dans lequel l'huile végétale raffinée comprend moins de 1 ppm, de préférence moins de 0.3 ppm de monochloropropanediol (MCPD), en particulier de diesters de MCPD.
